# EUROPEAN PATENT APPLICATION

(11) **EP 4 317 080 A1**
(43) Date of publication of application: **07.02.2024**
(21) Application number: 22863538.9
(22) Date of filing: 31.08.2022
(51) Int. Cl.: C01G 53/00, C01B 33/18, H01M 4/36, H01M 4/505, H01M 4/525, H01M 4/62, H01M 10/0525

(54) **COMPOSITE MATERIAL AND PREPARATION METHOD THEREFOR AND LITHIUM-ION BATTERY POSITIVE ELECTRODE MATERIAL**

(30) Priority: 31.08.2021 CN 202111010628
(71) Applicant: SVOLT ENERGY TECHNOLOGY CO., LTD, Changzhou, Jiangsu 213200 (CN)
(72) Inventor: WANG, Yazhou, hangzhou, Jiangsu 213200 (CN); ZHANG, Shutao, hangzhou, Jiangsu 213200 (CN); LI, Zitan, hangzhou, Jiangsu 213200 (CN); WANG, Zhuang, hangzhou, Jiangsu 213200 (CN); MA, Jiali, hangzhou, Jiangsu 213200 (CN); BAI, Yan, hangzhou, Jiangsu 213200 (CN)
(74) Representative: Groth & Co. KB
(86) International application number: PCT/CN2022/116295
(87) International publication number: WO 2023/030403

(57) **Abstract**

A composite material and a preparation method therefor and a lithium-ion battery positive electrode material. The preparation method for the composite material comprises the following steps: performing first calcination treatment on a mixture of a manganese source, a nickel source, a lithium source and a cobalt source to obtain cobalt-doped lithium nickel manganese oxide; and performing second calcination treatment on a mixture of the cobalt-doped lithium nickel manganese oxide and silicon dioxide. In the preparation method for the composite material, combining CO doping increases material stability and electrical conductivity, and SiO₂ acts as a coating agent to improve the ionic conductivity of the composite material and to prevent HF corrosion, thus forming a stable interface; the method is conducive to the embedding of nickel oxide to form a lithium nickel manganese oxide composite material containing less impurity phase, which can effectively improve the capacity and rate performance of the lithium nickel manganese oxide composite material.

## Description

### CROSS REFERENCE TO RELATED APPLICATIONS

This application claims priority to Chinese Patent Application No.2021110106286, entitled "COMPOSITE MATERIAL AND PREPARATION METHOD THEREFOR AND LITHIUM-ION BATTERY POSITIVE ELECTRODE MATERIAL", and filed to the Chinese National Intellectual Property Administration on August 31, 2021, the entire contents of which are incorporated into this application by reference.

### TECHNICAL FIELD

The present disclosure relates to the field of lithium-ion battery technology, and in particular relates to a composite material and a preparation method therefor, as well as a lithium-ion battery positive electrode material.

### BACKGROUND

In recent years, with the increasing demand from car manufacturers for battery companies, there is an urgent need for high specific energy, long lifespan, and low-cost positive electrode materials and batteries prepared therefrom. Lithium-ion batteries are popular due to their advantages such as high working voltage, high specific energy, long cycle life and low pollution.

Currently, the commonly used positive electrode materials are lithium cobaltate, lithium manganate, lithium nickel cobalt manganate, lithium iron phosphate, and high voltage lithium nickel manganite, etc. Cobalt is expensive, and lithium cobaltate and lithium nickel cobalt manganate have significant safety hazards when used in power batteries. Lithium manganate, lithium nickel manganate, and lithium iron phosphate are ideal positive electrode materials for lithium ion power batteries. Although lithium manganate material has low cost and good safety performance, a specific capacity of the lithium manganate material is relatively low. Due to the dissolution of Mn, Jahn Teller distortion effect and lattice instability, the cycle life, especially high-temperature cycling performance of the lithium manganate material, is not ideal. Research has shown that doping can effectively improve its high-temperature cycling performance, especially the Ni doped LiNi_{0.5}Mn_{1.5}O₄, which increases the valence of manganese above 3.5, which can effectively suppress Mn dissolution, Jahn Teller distortion effect, and lattice instability, and the discharge voltage platform can reach up to 4.7V, making it an ideal positive electrode material for power batteries.

In addition, in order to further increase capacity and improve cycling performance, research has shown that by controlling particle size, small particle size lithium nickel manganate materials can significantly increase the capacity of lithium nickel manganate, but the cycling performance of lithium nickel manganate needs to be improved. At present, there are two main methods for preparing lithium nickel manganate. The first type is to mix nickel salt solution and manganese salt solution in a certain proportion, then add hydroxide or carbonate for co-precipitation to form a precursor, and then add lithium salt to calcine to form lithium nickel manganate. The second type is to prepare lithium nickel manganate by mixing and calcining of oxide of nickel, oxide of manganese and lithium salt. Among the above two methods for preparing lithium nickel manganate, the cost advantage of using oxide of nickel, oxide of manganese and lithium salt to prepare lithium nickel manganate is very significant, but it is not suitable for target products with complex composition elements. According to the results reported in the literature, lithium nickel manganate particles obtained by simple solid-state ball milling method are generally larger (7µm~16um), contain more impurity phase components, and have a low specific capacity, and the charging and discharging curves of materials are difficult to present a single charging and discharging platform, resulting in poor cycling performance. The reason for this is still the poor uniformity of raw material mixing.

Therefore, there is an urgent need for a composite material with a high capacity and excellent cycling performance.

### SUMMARY

The present disclosure provides a method for preparing a composite material, comprising the following steps:
performing a first calcination treatment on a mixture of a manganese source, a nickel source, a lithium source and a cobalt source to obtain a cobalt-doped lithium nickel manganate; and
performing a second calcination treatment on a mixture of the cobalt-doped lithium nickel manganate and silicon dioxide.

In one embodiment, the manganese source comprises trimanganese tetraoxide.

In one embodiment, the manganese source has a particle size D50 ranging from 2µm to 4 µm.

In one embodiment, the nickel source comprises nickel oxide.

In one embodiment, the nickel source has a particle size D50 ranging from 8µm to 10 µm.

In one embodiment, the lithium source comprises lithium carbonate.

In one embodiment, the lithium source has a particle size D50 ranging from 8 µm to 10 µm.

In one embodiment, the cobalt source comprises cobalt hydroxide and/or cobalt oxide.

In one embodiment, the atomic molar ratio of the lithium source, the nickel source, and the manganese source, calculated by Li, Ni, and Mn respectively, is (1.01-1.05): (0.4-0.475): (1.525-1.6).

In one embodiment, the atomic molar ratio of the cobalt source and the nickel source, calculated by Co and Ni respectively, is (0.03-0.06): 1.

In one embodiment, the process for preparing the nickel oxide comprises the following step: grinding a suspension of the nickel oxide to a particle size D50 ranging from 300nm to 800nm before freeze-drying.

In one embodiment, in the suspension of the nickel oxide, a solid content of the nickel oxide is in a range from 25% to 35%;

In one embodiment, the freeze-drying is carried out at a temperature ranging from -20°C to -40 °C and a vacuum degree ranging from 3Pa to 10Pa.

In one embodiment, a mass ratio of the cobalt-doped lithium nickel manganate to the silicon dioxide is 1: (0.005-0.02);

In one embodiment, the particle size of the silicon dioxide is in a range from 10 nm to 20 nm.

In one embodiment, the first calcination treatment comprises the following steps:
heating the mixture of the manganese source, the nickel source, the lithium source, and the cobalt source to a temperature of 800°C to 950°C, and
keeping the temperature at 800°C to 950°C.

In one embodiment, the temperature is kept for 10 hours to 12 hours.

In one embodiment, the first calcination treatment is carried out in an atmosphere of air, with a flow rate of air ranging from 18 L/min to 22 L/min.

In one embodiment, the heating rate during the process of heating to a temperature ranging from 800 to 950 °C is in a range from 2°C/min to 4°C/min.

In one embodiment, the mixture of the manganese source, the nickel source, the lithium source, and the cobalt source is firstly stirred and then subjected to the first calcination treatment.

In one embodiment, the rotational speed of the stirring treatment is in a range from 1800rpm to 2200rpm, and the time for the stirring treatment is in a range from 15 minutes to 25 minutes.

In one embodiment, the second calcination treatment comprises the following steps:
heating the mixture of the cobalt-doped lithium nickel manganate and the silicon dioxide to 500°C to 700°C, and
keeping the temperature under a condition of 500°C to 700°C.

In one embodiment, the time for keeping the temperature is in a range from 10 hours to 12 hours.

In one embodiment, the second calcination treatment is carried out in an atmosphere of air, with a flow rate of air ranging from 18 L/min to 22L/min.

In one embodiment, the heating rate during the process of heating to a temperature ranging from 500 to 700 °C is in a range from 2°C/min to 4°C/min.

In one embodiment, the mixture of the cobalt-doped lithium nickel manganate and the silicon dioxide is firstly stirred and then subjected to the second calcination treatment.

In one embodiment, the rotational speed of the stirring treatment is in a range from 1800rpm to 2200rpm, and the time for the stirring treatment is in a range from 15 minutes to 25minutes.

A composite material is obtained by the method for preparing a composite material.

A positive electrode material for a lithium-ion battery is mainly prepared from the composite material.

### BRIEF DESCRIPTION OF THE DRAWINGS

In order to provide a clearer explanation of the technical solution of the embodiments of the present disclosure, a brief introduction will be given to the accompanying drawings required in the embodiments. It should be understood that the following drawings are only examples of the embodiments of the present disclosure, and the size ratio in the drawings does not directly correspond to the true ratio of the embodiments. At the same time, the following drawings only illustrate certain embodiments of the present disclosure, and therefore should not be regarded as limiting the scope.
FIG. 1 is a scanning electron microscope image of the composite material obtained in Example 1;
FIG. 2 is cycling performance test results of the battery prepared from composite materials;
FIG. 3 is a graph showing the relationship between the constant current charging ratio and discharge current of the battery prepared from composite materials;
FIG. 4 is a graph showing the relationship between the discharge capacity retention rate and discharge current of the battery prepared from composite materials.

### DETAILED DESCRIPTION

The advantages of the embodiment in the application content will be partly demonstrated in the embodiment of the following specification, partly are obvious according to the specification or can be obtained through some examples of the present disclosure.

The technical solution of the present disclosure will be further described below with reference to the accompanying drawings and some embodiments.

In order to make the purpose, the technical solution and advantages of the present disclosure clearer, the present disclosure will be further described in detail below with reference to the accompanying drawings and embodiments. It should be understood that the embodiments described herein are only used to explain the present disclosure and are not intended to limit the present disclosure. In addition, the technical features involved in the various embodiments of the present disclosure described below can be combined with each other as long as they do not conflict with each other. Without departing from the principles of the examples of the present disclosure, some improvements and modifications can be made, which are also considered as the scope of protection of the embodiments of the present disclosure.

The present disclosure relates to a preparation method for a composite material, comprising the following steps:
performing a first calcination treatment on a mixture of a manganese source, a nickel source, a lithium source and a cobalt source to obtain a cobalt-doped lithium nickel manganate; and
performing a second calcination treatment on a mixture of the cobalt-doped lithium nickel manganate and silicon dioxide.

The mechanism that the lithium nickel manganate is synthesized through solid phase calcination of oxides is as follows: the oxide of manganese is used as the base, the lithium salt is first embedded into the base to react to form lithium manganate, and then the oxide of nickel is gradually embedded into the interior of lithium manganate to form lithium nickel manganate. Therefore, starting from the reaction mechanism of oxide calcination to prepare lithium nickel manganate, a small particle size spinel lithium nickel manganate composite material was prepared by the present disclosure through a new preparation method. The above preparation method not only facilitates the embedding of oxide of nickel, but also facilitates the formation of lithium nickel manganate composite materials with fewer impurities, effectively improving the capacity and rate performance of lithium nickel manganate composite materials. Lithium nickel manganate with small particle size has a larger specific surface area and more side reactions when in contact with the electrolyte. Therefore, the present disclosure uses nano-SiO₂ for coating to protect the cycling performance of lithium nickel manganate.

In one embodiment, the manganese source comprises trimanganese tetraoxide (Mn₃O₄).

In one embodiment, the manganese source has a particle size D50 ranging from 2µm to 4 µm.

In this embodiment, the particle size D50 of the manganese source can also be selected as 2.2 µm, 2.5 µm, 2.7 µm, 3 µm, 3.2 µm, 3.5 µm, 3.7 µm or 3.9 µm.

The lithium nickel manganate particles prepared using 3µm Mn₃O₄ as the substrate to react are also smaller, resulting in a Co-doped SiO₂ coated lithium nickel manganate with a particle size ranging from 1µm to 3µm. There is a significant improvement in both cycling and rate performance, especially in rate performance. The material can charge and discharge at a current of 40C with a capacity retention rate of 96.24% and at a current of 80C with a capacity retention rate of 82.58%. This means that electric vehicles will charge up to 80% in less than 1 minute, giving them a significant competitive advantage.

In one embodiment, the nickel source comprises nickel oxide (NiO).

In one embodiment, the nickel source has an particle size D50 ranging from 8 µm to 10 µm.

In one embodiment, the lithium source comprises lithium carbonate (Li₂CO₃).

In one embodiment, the lithium source has a particle size D50 ranging from 8µm to 10 µm.

In one embodiment, the particle size D50 of the lithium source can also be selected as 8.2 µm, 8.5 µm, 8.7 µm, 9 µm, 9.2 µm, 9.5 µm, 9.7 µm or 9.9 µm.

In one embodiment, the cobalt source comprises cobalt hydroxide and/or cobalt oxide.

In one embodiment, the atomic molar ratio of lithium source, nickel source, and manganese source is (1.01-1.05): (0.4-0.475): (1.525-1.6), which is calculated in terms of Li, Ni, and Mn, respectively.

In one embodiment, the atomic molar ratio of lithium source, nickel source, and manganese source is (1.01-1.05): (0.4-0.475): (1.525-1.6), which is calculated in terms of Li, Ni, and Mn, respectively. Alternatively, it can also be selected as 1.01:0.4:1.525, 1.02:0.42:1.53, 1.04:0.45:1.55, 1.04:0.46:1.57, or 1.05:0.475:1.6.

In one embodiment, the atomic molar ratio of cobalt source to nickel source is (0.03-0.06): 1, which is calculated in terms of Co and Ni, respectively.

In one embodiment, the atomic molar ratio of cobalt source and nickel source can also be selected as 0.035:1, 0.036:1, 0.037:1, 0.038:1, 0.04:1, 0.042:1, 0.045:1, 0.0475:1, 0.05:1, 0.052:1, or 0.055:1, which are calculated in terms of Co and Ni, respectively.

In one embodiment, the process for preparing the nickel oxide comprises the following steps:
grinding a suspension of the nickel oxide to a particle size D50 ranging from 300nm to 800nm before freeze-drying.

The use of grinding technology combined with freeze-drying technology to obtain nickel oxide helps to form lithium nickel manganate with fewer impurity phases.

In one embodiment, the suspension of nickel oxide is ground to a particle size D50 ranging from 300nm to 800nm, and the particle size D50 can also be selected as 350nm, 400nm, 450nm, 500nm, 550nm, 600nm, 650nm, 700nm, and 750nm.

In one embodiment, the solid content of nickel oxide in the suspension of nickel oxide is in a range from 25% to 35%.

In one embodiment, the solid content of nickel oxide is in a range from 25% to 35%, and can also be selected from 26%, 27%, 28%, 29%, 30%, 31%, 32%, 33% or 34%.

In one embodiment, the freeze-drying is carried out at a temperature ranging from -20°C to -40°C and a vacuum degree ranging from 3 Pa to 10Pa.

The use of freeze-drying technology helps to prevent secondary aggregation of NiO during the drying process.

In one embodiment, the temperature for freeze-drying is in a range from -20°C to -40 °C, and can also be selected from -21 °C, -22 °C, -23 °C, -24 °C, -25 °C, -26 °C, -27 °C, -28 °C, -29 °C, -30 °C, -31 °C, -32 °C, -33 °C, -34 °C, -35 °C, -36 °C, -37 °C, -38 °C, -39 °C or -40 °C.

The present disclosure limits the grinding to a particle size D50 ranging from 300nm to 800nm, a solid content of nickel oxide ranging from 25% to 35%, and a freeze-drying temperature ranging from -20 °C to -40 °C. By combining the above conditions, the obtained nano-nickel oxide has excellent dispersibility. The use of the prepared nano-NiO for calcination to prepare lithium nickel manganate helps to reduce the impurity phases in the preparation of lithium nickel manganate by oxide calcination, and can obtain lithium nickel manganate with a small particle size ranging from 1µm to 3µm. Fewer impurity phases help to improve the cycling stability of the material, and a small particle size ranging from 1µm to 3 µm is conducive to the full use of the capacity of lithium nickel manganate.

In one embodiment, the mass ratio of cobalt-doped lithium nickel manganate to silicon dioxide is 1: (0.005-0.02).

The use of SiO₂ as a coating agent for lithium nickel manganate has two major advantages: (1) SiO₂ as a coating agent will form Li₂SiO₃ with excellent ion conductivity on the surface of lithium nickel manganate. The synergistic effect of Li₂SiO₃ and Co element doping can simultaneously improve the ion conductivity and electronic conductivity of lithium nickel manganate composite materials, greatly improving the rate performance of lithium nickel manganate materials; (2) the formed Li₂SiO₃ can react with HF generated in the high-voltage electrolyte, thereby preventing HF from corroding the positive electrode material, improving the structural stability of lithium nickel manganate, and improving the cycling performance of the material.

In one embodiment, the mass ratio of cobalt-doped lithium nickel manganate to silicon dioxide is 1: (0.005-0.02), and can also be selected as 1:0.006, 1:0.007, 1:0.008, 1:0.009, 1:0.01, 1:0.011, 1:0.012, 1:0.013, 1:0.014, 1:0.015, 1:0.016, 1:0.017, 1:0.018, or 1:0.019.

In one embodiment, the silicon dioxide has a particle size ranging from 10nm to 20nm.

In one embodiment, the particle size of silicon dioxide can also be selected as 11nm, 11.5nm, 12nm, 12.5nm, 13nm, 13.5nm, 14nm, 14.5nm, 15nm, 15.5nm, 16nm, 16.5nm, 17nm, 17.5nm, 18nm, 18.5nm, 19nm or 19.5nm.

In one embodiment, the first calcination treatment comprises the following steps:
The mixture of the manganese source, the nickel source, the lithium source and the cobalt source is heated to a temperature ranging from 800°C to 950°C and kept at 800°C to 950°C.

In one embodiment, the mixture of the manganese source, the nickel source, the lithium source, and the cobalt source is heated to a temperature ranging from 800°C to 950°C, and the temperature can also be selected from 810°C, 820°C, 830°C, 840°C, 850°C, 860°C, 870°C, 880°C, 890°C, 900°C, 910°C, 920°C, 930°C or 940°C; the temperature can be kept in a range from 800°C to 950°C, and the temperature can also be selected from 810°C, 820°C, 830°C, 840°C, 850°C, 860°C, 870°C, 880°C, 890°C, 900°C, 910°C, 920°C, 930°C or 940°C.

In one embodiment, the time for keeping the temperature is in a range from 10 hours to 12 hours.

In one embodiment, the time for keeping the temperature can also be selected from 10.5 hours, 11 hours or 12 hours.

In one embodiment, the first calcination treatment is carried out in an atmosphere of air, with an air flow rate ranging from 18 L/min to 22 L/min.

In one embodiment, the air flow rate is 18 L/min to 22 L/min, and can also be selected from 18.5 L/min, 19 L/min, 19.5 L/min, 20 L/min, 20.5 L/min, or 21 L/min.

In one embodiment, the heating rate during the process of heating to a temperature ranging from 800°C to 950°C is in a range from 2°C/min to 4°C/min.

In one embodiment, the heating rate is in a range from 2°C/min to 4°C/min, and can also be selected from 2.2°C/min, 2.5°C/min, 2.7°C/min, 3°C/min, 3.2°C/min, 3.5°C/min, or 3.7°C/min.

The present disclosure adopts a suitable combination of first calcination temperature, heating rate, the time for keeping the temperature, and air flow rate to reduce the content of impurity phases in the obtained lithium nickel manganate, which is beneficial for improving the cycling performance of battery materials.

In one embodiment, the mixture of the manganese source, the nickel source, the lithium source, and the cobalt source is first stirred and then subjected to the first calcination treatment.

In the present disclosure, the manganese source, nickel source, and lithium source are first mixed, and then they are mixed with the cobalt source.

In one embodiment, the rotational speed of stirring treatment is in a range from 1800rpm to 2200rpm, and the time for stirring treatment is in a range from 15 minutes to 25 minutes. In one embodiment, the rotation speed for stirring treatment is in a range from 1800rpm to 2200rpm, and can also be selected from 1850rpm, 1870rpm, 1900rpm, 1920rpm, 1950rpm or 1970rpm; the stirring time can also be selected from 16 minutes, 17 minutes, 18 minutes, 19 minutes, 20 minutes, 21 minutes, 22 minutes, 23 minutes or 24 minutes.

In one embodiment, the second calcination treatment comprises the following steps of:
the mixture of cobalt-doped lithium nickel manganate and silicon dioxide is heated to a temperature ranging from 500°C to 700°C and kept at a temperature ranging from 500°C to 700 °C.

In one embodiment, the mixture of cobalt-doped lithium nickel manganate and silicon dioxide is heated to 500°C to 700°C, and can also be heated to 510°C, 520°C, 530°C, 540°C, 550°C, 560°C, 570°C, 580°C, 590°C, 600°C, 610°C, 620°C, 630°C, 640°C, 650°C, 660 °C, 670°C, 680°C or 690°C.

In one embodiment, the time for keeping the temperature is in a range from 10 hours to 12 hours.

In one embodiment, the time for keeping the temperature can also be selected from 10.5 hours, 11 hours, or 11.5 hours.

In one embodiment, the second calcination treatment is carried out in an atmosphere of air, with an air flow rate ranging from 18 L/min to 22 L/min.

In one embodiment, the air flow rate can also be selected from 18.2L/min, 18.5L/min, 18.7L/min, 19L/min, 19.2L/min, 19.5L/min or 19.7L/min.

In one embodiment, the heating rate during the process of heating to a temperature ranging from 500°C to 700°C is in a range from 2°C/min to 4°C/min.

In one embodiment, the heating rate is in a range from 2°C/min to 4 °C/min, and can also be selected from 2.2°C/min, 2.5°C/min, 2.7°C/min, 3°C/min, 3.2°C/min, 3.5°C/min, or 3.7°C/min.

In one embodiment, the mixture of cobalt-doped lithium nickel manganate and silicon dioxide is first stirred and then subjected to a second calcination treatment.

In one embodiment, the rotational speed of stirring treatment is in a range from 1800rpm to 2200rpm, and the time for stirring treatment is in a range from 15 minutes to 25 minutes. In one embodiment, the rotation speed for stirring treatment is in a range from 1800rpm to 2200rpm, and can also be selected from 1850rpm, 1870rpm, 1900rpm, 1920rpm, 1950rpm, or 1970rpm; the time for stirring treatment can also be selected from 16 minutes, 17 minutes, 18 minutes, 19 minutes, 20 minutes, 21 minutes, 22 minutes, 23 minutes, or 24 minutes.

The present disclosure also relates to the composite material obtained by the preparation method of the composite materials mentioned above.

The lithium nickel manganate composite material in the present disclosure not only has excellent cycling stability, but also can be charged and discharged at super high magnification.

The present disclosure also relates to a lithium-ion battery positive electrode material, mainly prepared from the above-mentioned composite material.

The lithium-ion battery positive electrode material according to the present disclosure can better improve the cycling stability and conductivity of lithium-ion batteries.

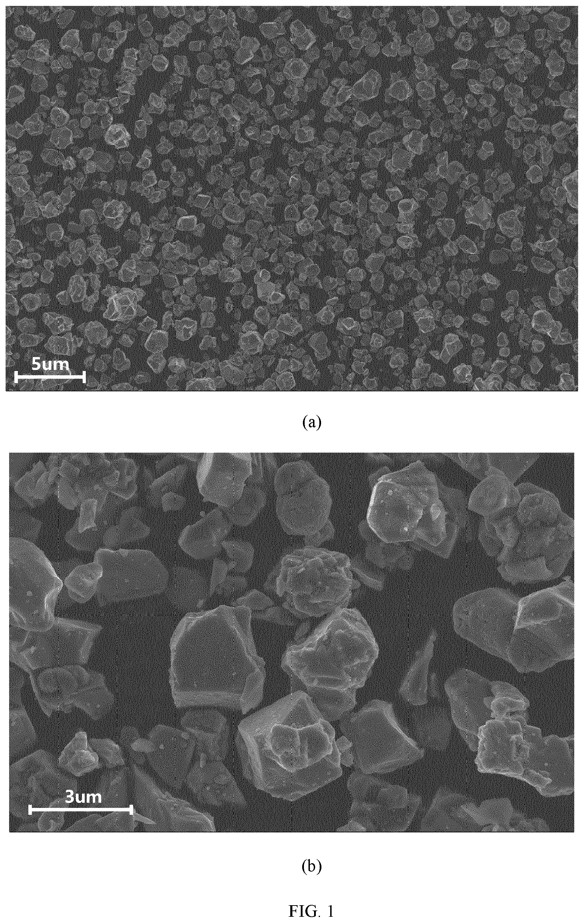

The following are typical but not restrictive embodiments of the present disclosure:
Both (a) and (b) in FIG. 1 are scanning electron microscopy images of the composite materials obtained in Example 1.

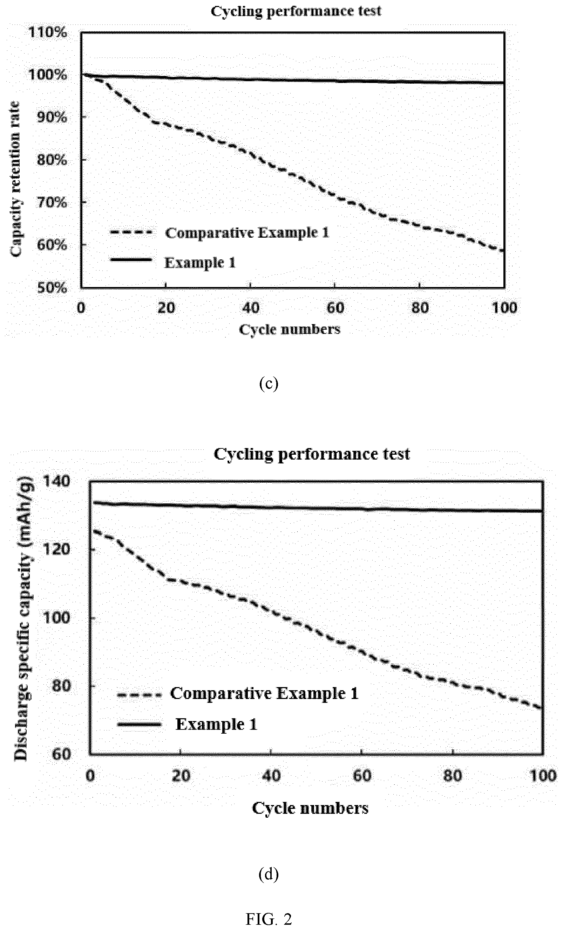

FIG. 2 is a graph showing cycling performance test results of the battery prepared from the composite materials; wherein, (c) in FIG. 2 is a graph showing the relationship between capacity retention rate and number of cycles; and (d) in FIG. 2 is a graph showing the relationship between the discharge specific capacity and the number of cycles.

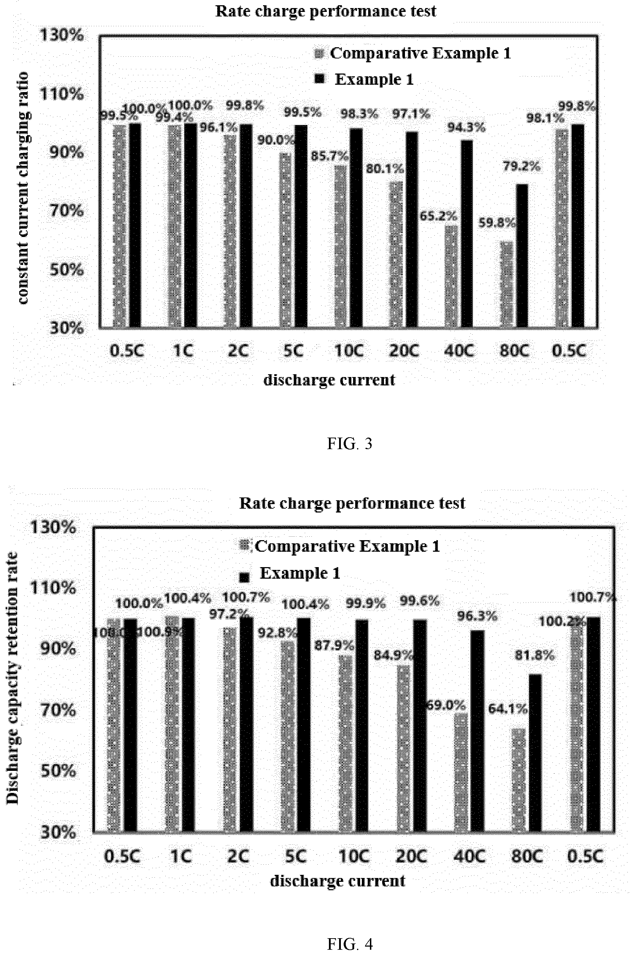

FIG. 3 is a graph showing the relationship between the constant current charging ratio and discharge current of the battery prepared from the composite materials.
FIG. 4 is a graph showing the relationship between the discharge capacity retention rate and the discharge current of the battery prepared from the composite materials. In FIG. 4, the specific values of the discharge capacity retention rate for Comparative Example 1 and Example 1 under different discharge currents are shown in Table 2 (rate performance).

### EXAMPLE 1

A method for preparing a composite material, comprising the following steps:
(a) NiO was prepared into a suspension with a solid content of 30%, a sand mill was used for sanding until D50 was 500nm, NiO was collected for freeze-drying at -30°C and a vacuum degree of 8 Pa, until it was completely dried, and nano-NiO powder was collected;
(b) Li₂CO₃, NiO and Mn₃O₄ were mixed according to a Li: Ni: Mn atomic molar ratio of 1.05:0.4:1.6, where the particle size D50 of Mn₃O₄ was 3 µm, the particle size D50 of Li₂CO₃ was 9 µm; additionally, Co(OH)₂ was added in a Ni: Co atomic molar ratio of 1:0.06, and stirred for 20 minutes using a mixing stirrer at 2000 rpm; the above mixed and stirred materials were calcined, and the calcination method comprised: under an air atmosphere with a flow rate of 20L/min, a heating rate of 4°C/min, it was heated to 950°C and held for 12 hours, natural cooled and the material were collected;
(c) the collected lithium nickel manganate and nano SiO₂ were mixed in a mass ratio of 1:0.02. The particle size of SiO₂ was 20nm. The mixture was stirred for 20 minutes at 2000 rpm using a mixing stirrer. The mixed material was then heated to 700°C in an air atmosphere at a flow rate of 20L/min and a heating rate of 4°C/min. After holding the temperature for 12 hours, the material was naturally cooled and collected.

### EXAMPLE 2

A method for preparing a composite material, comprising the following steps of:
(a) NiO was prepared into a suspension with a solid content of 30%, a sand mill was used for sanding until D50 was 300nm, NiO was collected for freeze-drying at -20 °C and a vacuum degree of 3 Pa, until it was completely dried, and nano-NiO powder was collected;
(b) Li₂CO₃, NiO, and Mn₃O₄ were mixed according to a Li: Ni: Mn atomic molar ratio of 1.05:0.4:1.6, where the particle size D50 of Mn₃O₄ was 3 µm, the particle size D50 of Li₂CO₃ was 9 µm; additionally, Co(OH)₂ was added in a Ni: Co atomic molar ratio of 1:0.04, and stirred for 20 minutes using a mixing stirrer at 2000 rpm; the above mixed and stirred materials were calcined, and the calcination method comprised: under an air atmosphere with a flow rate of 20L/min, a heating rate of 2°C/min, it was heated to 800°C, held the temperature for 10 hours, natural cooled, and the material were collected;
(c) the collected lithium nickel manganate and nano-SiO₂ were mixed in a mass ratio of 1:0.005. The particle size of SiO₂ was 10nm. The mixture was stirred for 20 minutes at 2000rpm using a mixing stirrer. The mixed material was then heated to 500°C in an air atmosphere at a flow rate of 20L/min and a heating rate of 2°C/min. After holding for 10 hours, the material was naturally cooled and collected.

### EXAMPLE 3

A method for preparing a composite material, comprising the following steps of:
(a) NiO was prepared into a suspension with a solid content of 30%, a sand mill was used for sanding until D50 was 800nm, NiO was collected for freeze-drying at -40°C and a vacuum degree of 10 Pa, until it was completely dried, and nano-NiO powder was collected;
(b) Li₂CO₃, NiO, and Mn₃O₄ were mixed according to a Li: Ni: Mn atomic molar ratio of 1.05:0.4: 1.6, where the particle size D50 of Mn₃O₄ was 3 µm, the particle size D50 of Li₂CO₃ was 9 µm; additionally, Co(OH)₂ was added in a Ni: Co atomic molar ratio of 1:0.05, and stirred for 20 minutes using a mixing stirrer at 2000 rpm; the above mixed and stirred materials were calcined, and the calcination method comprised: under an air atmosphere with a flow rate of 20L/min, a heating rate of 3°C/min, it was heated to 900°C, held the temperature for 11 hours, natural cooled, and material were collected;
(c) the collected lithium nickel manganate and nano-SiO₂ were mixed in a mass ratio of 1:0.02. The particle size of SiO₂ was 20nm. The mixture was stirred for 20 minutes at 2000rpm using a mixing stirrer. The mixed material was then heated to 600°C in an air atmosphere at a flow rate of 20L/min and a heating rate of 3°C/min. After holding for 11 hours, the material was naturally cooled and collected.

### COMPARATIVE EXAMPLE 1

(a) NiO was prepared into a suspension with a solid content of 30%, a sand mill was used for sanding until D50 was 500nm, NiO was collected for freeze-drying at -30°C and a vacuum degree of 8 Pa, until it was completely dried, and nano-NiO powder was collected;
(b) Li₂CO₃, NiO, and Mn₃O₄ were mixed according to a Li: Ni: Mn atomic molar ratio of 1.05:0.4: 1.6, where the particle size D50 of Mn₃O₄ was 3 µm, the particle size D50 of Li₂CO₃ was 9 µm; additionally, Co(OH)₂ was added in a Ni: Co atomic molar ratio of 1:0.06, and stirred for 20 minutes using a mixing stirrer at 2000 rpm; the above mixed and stirred materials were calcined, and the calcination method comprised: under an air atmosphere with a flow rate of 20L/min, a heating rate of 4°C/min, it was heated to 950°C, held the temperature for 12 hours, natural cooled, and the material were collected.

### COMPARATIVE EXAMPLE 2

(a) NiO was prepared into a suspension with a solid content of 30%, a sand mill was used for sanding until D50 was 500nm, NiO was collected for freeze-drying at -30°C and a vacuum degree of 8 Pa, until it was completely dried, and nano-NiO powder was collected;
(b) Li₂CO₃, NiO, and Mn₃O₄ were mixed according to a Li: Ni: Mn atomic molar ratio of 1.05:0.4: 1.6, where the particle size D50 of Mn₃O₄ was 3 µm, the particle size D50 of Li₂CO₃ was 9 µm; the mixture was stirred for 20 minutes using a mixing stirrer at 2000rpm; the above mixed and stirred materials were calcined, and the calcination method comprised: under an air atmosphere with a flow rate of 20L/min, a heating rate of 4°C/min, it was heated to 950°C, held the temperature for 12 hours, natural cooled, and the material were collected;
(c) the collected lithium nickel manganate and nano-SiO₂ were mixed in a mass ratio of 1:0.02. The particle size of SiO₂ was 20nm. The mixture was stirred for 20 minutes at 2000rpm using a mixing stirrer. The mixed material was then heated to 700°C in an air atmosphere at a flow rate of 20L/min and a heating rate of 4°C/min. After holding for 10 hours, the material was naturally cooled and collected.

### EXPERIMENTAL EXAMPLE

The positive electrode composite materials prepared in the above Examples and Comparative Examples was homogenized with conductive carbon black SP and polyvinylidene fluoride (PVDF) in a ratio of 90:5:5 to prepare electrode plates. Finally, a button CR2032 battery was prepared and subjected to cycling performance testing and rate performance testing, respectively. The steps of cycling performance testing and the steps of rate performance testing included:

### (1) 1C cycling performance

A blue electric tester was used to test the button batteries prepared from materials in Example 1, Comparative Example 1 and Comparative Example 2, with a voltage range of 3.5V to 5V and 0.1C, and charging and discharging activation was conducted for one cycle. Then, charging was conducted at 0.5C constant current and constant voltage with a cut-off current of 0.05C. Constant current discharging at a current of 1C was conducted for 50 cycles to obtain relevant data on the parameters, such as the first discharge specific capacity, first coulomb efficiency, 100^{th} cycle discharge specific capacity, and 100^{th} cycle capacity retention rate, etc.

### (2) Rate discharge performance

A blue electric tester was used to test the button battery prepared with cobalt free thick electrodes in Example 1, Comparative Example 1 and Comparative Example 2, with a voltage ranging from 3.5V to 5V, charging at a constant current and constant voltage with a current of 0.5C, with a charging cut-off current of 0.05C; constant current discharge at 0.5C, 1C, 2C, 5C, 10C, 20C, 40C, 80C and 0.5C currents were performed, with a discharge cut-off voltage of 3.5V

The test results were shown in Tables 1 and 2:

**Table 1. Cycling Performance**

| 1C cycling performance | first discharge specific capacity | first coulomb efficiency | 100^{th} cycle discharge specific capacity | 100^{th} cycle capacity retention rate |
|---|---|---|---|---|
| Comparative Example 1 | 125. SmAh/g | 88.7% | 73.7mAh/g | 58.73% |
| Comparative Example 2 | 120.9mAh/g | 89.2% | 100.6mAh/g | 83.21% |
| Example 1 | 133.8mAh/g | 94.8% | 131.3mAh/g | 98.13% |

**Table 2. Rate Performance**

| Different discharge current conditions | Comparative Example 1 | | Comparative Example 2 | | Example 1 | |
|---|---|---|---|---|---|---|
| | Capacity mAh/g | Capacity retention rate /% | Capacity mAh/g | Capacity retention rate /% | Capacity mAh/g | Capacity retention rate /% |
| 0.5C | 124.1 | 100.0 | 121.2 | 100.0 | 133.6 | 100.0 |
| 1C | 125.2 | 100.9 | 121.1 | 99.9 | 134.2 | 100.4 |
| 2C | 120.6 | 97.2 | 119 | 98.2 | 134.5 | 100.7 |
| 5C | 115.2 | 92.8 | 115 | 94.9 | 134.1 | 100.4 |
| 10C | 109.1 | 87.9 | 107 | 88.3 | 133.4 | 99.9 |
| 20C | 105.3 | 84.9 | 104 | 85.8 | 133.1 | 99.6 |
| 40C | 85.6 | 69.0 | 79 | 65.2 | 128.7 | 96.3 |
| 80C | 79.6 | 64.1 | 56 | 46.2 | 109.3 | 81.8 |
| 0.5C | 124.3 | 100.2 | 120.6 | 99.5 | 134.5 | 100.7 |

From Table 1, it can be seen that the first discharge specific capacity for Comparative Example 1 is 125.5mAh/g, and the first discharge specific capacity for Comparative Example 2 is 120.9mAh/g. However, the first discharge specific capacity of lithium nickel manganate composite material with a small particle size prepared by the method in Example 1 can be increased to 133.8mAh/g; the first coulomb efficiency is increased to 94.8%, and lithium nickel manganate composite material with a small particle size according to the present disclosure can increase the 100^{th} cycle capacity retention rate to 98.13%.

From Table 2, it can be seen that in the rate performance test, the capacity retention rate of the composite material in Comparative Example 1 at 80C rate discharge performance is 64.1%, and the capacity retention rate of the composite material in Comparative Example 2 at 80C rate discharge performance is 46.2%. The capacity retention rate of the composite material in Example 1 at 80C rate discharge performance is increased to 81.8%, and the constant current charging ratio at 80C is increased to 79.2% (Fig.3). From this, it can be seen that the lithium nickel manganate composite material prepared by the method of the present disclosure not only improves the cycling performance of the battery, but also provides more transmission channels for lithium ions and electrons, greatly improving the rate performance of the battery. At a current density of 80C, it can be charged by about 80%, which means that electric vehicles will be charged to 80% in less than 1 minute, which is very competitive.

### INDUSTRIAL APPLICABILITY

In summary, the present disclosure provides a composite material and a preparation method thereof, as well as a lithium-ion battery positive electrode material. The method of the present disclosure improves material stability and electronic conductivity by combining Co doping. The lithium nickel manganate with a small particle size prepared by nano NiO ensures full capacity utilization, and SiO₂ serves as a coating agent to improve the ion conductivity of the material and prevent HF corrosion, forming a stable interface. This method helps to embed nickel oxides and form lithium nickel manganate composite materials with fewer impurity phases, which can effectively improve the capacity and rate performance of lithium nickel manganate composite materials. The composite material of the present disclosure not only has excellent cyclic stability, but also can be charged and discharged at extremely high magnification.

## Claims

1. A method for preparing a composite material, wherein the method comprises the following steps:
performing a first calcination treatment on a mixture of a manganese source, a nickel source, a lithium source and a cobalt source to obtain a cobalt-doped lithium nickel manganate; and
performing a second calcination treatment on a mixture of the cobalt-doped lithium nickel manganate and silicon dioxide.

2. The method for preparing a composite material of claim 1, wherein the method comprises at least one of the following features (1) to (2):
(1) the manganese source comprises trimanganese tetraoxide;
(2) the manganese source has a particle size D50 ranging from 2µm to 4 µm.

3. The method for preparing a composite material of claim 1, wherein the method comprises at least one of the following features (1) to (2):
(1) the nickel source comprises nickel oxide;
(2) the nickel source has a particle size D50 ranging from 8µm to 10µm.

4. The method for preparing a composite material of claim 1, wherein the method comprises at least one of the following features (1) to (2):
(1) the lithium source comprises lithium carbonate;
(2) the lithium source has a particle size D50 ranging from 8µm to 10µm.

5. The method for preparing a composite material of claim 1, wherein the cobalt source comprises cobalt hydroxide and/or cobalt oxide.

6. The method for preparing a composite material of any one of claims 1 to 5, wherein the method comprises at least one of the following features (1) to (2):
(1) the atomic molar ratio of the lithium source, the nickel source and the manganese source, calculated by Li, Ni and Mn respectively, is (1.01-1.05): (0.4-0.475): (1.525-1.6);
(2) the atomic molar ratio of the cobalt source and the nickel source, calculated by Co and Ni respectively, is (0.03-0.06): 1.

7. The method for preparing a composite material of any one of claims 1 to 5, wherein the method comprises at least one of the following features (1) to (3):
(1) the process for preparing the nickel oxide comprises the following steps:
grinding a suspension of the nickel oxide to a particle size D50 ranging from 300nm to 800nm before freeze-drying;
(2) in the suspension of the nickel oxide, a solid content of the nickel oxide is in a range from 25% to 35%;
(3) the freeze-drying is carried out at a temperature ranging from -20°C to -40°C and a vacuum degree ranging from 3Pa to 10Pa.

8. The method for preparing a composite material of claim 1, wherein the method comprises at least one of the following features (1) to (2):
(1) a mass ratio of the cobalt-doped lithium nickel manganate to the silicon dioxide is 1: (0.005-0.02);
(2) the silicon dioxide has a particle size ranging from 10 nm to 20 nm.

9. The method for preparing a composite material of any one of claims 1 to 8, wherein the method comprises at least one of the following features (1) to (4):
(1) the first calcination treatment comprises the following steps:
heating the mixture of the manganese source, the nickel source, the lithium source, and the cobalt source to a temperature ranging from 800°C to 950°C, and keeping the temperature at 800°C to 950°C;
(2) keeping the temperature for 10 hours to 12 hours;
(3) performing the first calcination treatment in an atmosphere of air, with a flow rate of air ranging from 18 L/min to 22 L/min;
(4) increasing the temperature at a rate ranging from 2°C/min to 4°C/min during the process of heating to a temperature ranging from 800°C to 950°C.

10. The method for preparing a composite material of any one of claims 1 to 8, wherein the method comprises at least one of the following features (1) to (2):
(1) stirring firstly the mixture of the manganese source, the nickel source, the lithium source and the cobalt source, and then subjecting to the first calcination treatment;
(2) stirring at a rotational speed ranging from 1800 rpm to 2200rpm for 15 minutes to 25 minutes.

11. The method for preparing a composite material of any one of claims 1 to 8, wherein the method comprises at least one of the following features (1) to (6):
(1) the second calcination treatment comprises the following steps:
heating the mixture of the cobalt-doped lithium nickel manganate and the silicon dioxide to a temperature ranging from 500°C to 700°C and keeping the temperature ranging from 500°C to 700°C;
(2) keeping the temperature for 10 hours to 12 hours;
(3) performing the second calcination treatment in an atmosphere of air, with a flow rate of air ranging from 18 L/min to 22 L/min;
(4) increasing the temperature at a rate ranging from 2°C/min to 4°C/min during the process of heating to a temperature ranging from 500°C to 700°C;
(5) stirring firstly the mixture of the cobalt-doped lithium nickel manganate and the silicon dioxide, and then subjecting to the second calcination treatment;
(6) stirring at a rotational speed ranging from 1800 rpm to 2200rpm for 15min to 25min;

12. A composite material, obtained by the method for preparing a composite material of any one of claims 1 to 11.

13. A positive electrode material for lithium-ion batteries, wherein the positive electrode material for lithium-ion batteries is mainly prepared from the composite material of claim 12.
